# EUROPEAN PATENT SPECIFICATION

(11) **EP 3 306 222 B1**
(45) Date of publication and mention of the grant of the patent: **14.10.2020**
(21) Application number: 17178371.5
(22) Date of filing: 28.06.2017
(51) Int. Cl.: F24H 9/12, F24D 17/00

(54) **IMPROVEMENTS IN AND RELATING TO INSTALLATIONS FOR HEATING WATER**
VERBESSERUNGEN AN UND IM ZUSAMMENHANG MIT INSTALLATIONEN ZUR WARMWASSERBEREITUNG
PERFECTIONNEMENT APPORTÉS OU SE RAPPORTANT AUX INSTALLATIONS DE CHAUFFAGE D'EAU

(30) Priority: 29.06.2016 GB 201611303
(43) Date of publication of application: 11.04.2018
(73) Proprietor: Clean Heat Provision Limited, London SW20 8AW (GB)
(72) Inventor: ORCHARD, William, London, SW20 8TN (GB)
(74) Representative: Eve, Rosemary Margaret

(56) References cited:
- EP-A1- 2 306 110
- WO-A2-2006/111755
- US-A- 4 197 446

## Description

This invention relates to improvements in and relating to domestic and commercial heating installations for producing hot water.

The availability, and cost, of electricity increasingly tends to vary from day to day, or even over quite short periods. This may be due to the availability of 'green energy' from sun or wind, or to the inflexibility of nuclear power generation. This is as true for large-scale electricity generators and management of the power grid, as for local producers who may be offered a low price for feeding electricity back into the grid, even if this option is available.

It is thus an objective of the invention to provide a means for capturing such available and/or low-cost electrical energy so that it can be stored as hot water for domestic or commercial use, or even for space heating.

A further objective of the invention is to provide a means for combatting Legionella in in a hot water installation.

Document WO2006/111755 discloses an installation for fitting to a hot water store comprising: a cold water feed and a hot water discharge, a cold water inlet for connection to the hot water store from the cold water feed and a hot water outlet pipe or passage for connection between the hot water store and the hot water discharge, a bypass circuit having a circulating pump and connecting between the cold water feed and the hot water discharge; wherein the circulating pump is controlled to achieve a preset/ desired temperature at the hot water discharge, according to the temperature at the hot water outlet pipe or passage from the hot water store.

An installation in accordance with the invention is described in claim 1.

In operation, heated water may be withdrawn directly from the hot water store through the electric heater, or by activating the circulating pump, and depending on the demand for hot water, water may flow through the electric heater either into the hot water store to be stored as hot water, and/or out of it to the hot water discharge. Thus water may be effectively pre heated and stored in the hot water store when electricity is available at no cost or at a low tariff or heated on demand by withdrawing water from the hot water store or through the bypass circuit. In the event that water has been pre-heated to and stored at temperature above the required or permitted discharge temperature the circulating pump may be activated to dilute water from the hot water store using cold water from the cold water feed without activating the electric heater at that time.

Such an installation when connected to a hot water store provides a circuit to maximise the use of available or low-cost electricity to store energy as hot water, even at a temperature above that which is acceptable at the discharge.

By heating the water in the hot water store from time to time to a temperature above 60°C and using the circulating pump to circulate it in the bypass circuit allows the whole installation to be sterilised in order to eliminate Legionella.

An installation in accordance with the invention also has the advantage that in use water can be withdrawn at the discharge only by flowing through the electric heater. This means that if water either in the hot water store or in the bypass circuit is to be withdrawn from the installation it can be heated to above the critical temperature for Legionella by the electric heater.

Such an installation is thus characterised in that water may flow in either direction in the feed or outlet of the hot water store and flows through the electric heater whether it flows from the store or from the bypass circuit, or both, and that the electric heater is programmed to heat water withdrawn from the installation according to a pre-set or desired temperature and the temperature at the outlet of the store and that in the by-pass circuit. The circulating pump is likewise controlled in response to these temperatures to optimise the use of the temperatures in the installation, and the eventual need to boost the temperature of the water using the electric heater.

Compared with sources of high grade energy such as natural gas, oil or electricity, low grade heat is both plentiful and often relatively available.

Low-grade heat for the purposes of this specification is defined as low temperature heat below 100°C and may be considerably lower, but in every case will exceed the actual or anticipated temperature of the cold water feed.

Sources of low grade heat may be heat rejected by industry and power generation, heat from air, soil or water, and increasingly from solar energy. Heat extraction or upgrading by heat pumps, or combined heat and power are common methods to upgrade the heat to more useful temperatures and may be used in combination with the invention.

High grade energy is herein defined as energy that is available at temperatures above 100°C, namely, but not exclusively, from electricity.

Another objective of the invention is thus to provide a simple and cost-effective circuit that achieves high utilisation of heat from one or more lower-grade heat sources, to minimise the use of high grade energy in order to boost the temperature of the required domestic hot water to a desired temperature fit for health and purpose.

According to an embodiment of the invention the installation additionally comprises one or more heat exchangers in the bypass line between the feed pipe or passage and the three-way junction.

At least one of the heat source(s) in the bypass circuit preferably comprises a heat exchanger (or heat exchangers) arranged for connection to a lower grade heat source(s).

In one embodiment of the invention the electric heater is located in a chamber at the three-way connection connected to and contiguous with the hot water store. As with the embodiment described above where the electric heater is remote from the hot water store flow may occur in either direction between the chamber and the hot water store. The chamber also has the connection to the bypass circuit and the discharge for heated water arranged in such a way that water flowing from the bypass circuit to the discharge or to the hot water store or from the hot water store to the discharge has to pass over or through or is heated by the electric heater. This not only maximises its efficiency, but also is extremely cost-effective as it heats the water only as required. It also allows water to be drawn either from the hot water store, or from the external bypass circuit, in other words from the external heat exchanger, or from both depending on the demand for hot water, and its availability at a suitable temperature boosted as required by the electric heater, from the hot water store and/or the external circuit, or from a combination of the two.

Thus, depending on the respective water temperatures, water may be drawn from the hot water store directly to the discharge, mixed with water from the bypass line to heat it or cool it, and/or be boosted in temperature by the electric heater. Control of the circulating pump and of the electric heater is by means of a suitably programmed logic controller that assures that the temperature of the water at the discharge does not exceed the desired temperature, and whenever possible within the capacity of the installation meets the desired temperature.

The chamber housing the electric heater element(s) at the second or 'hot' connection may be attached to or inserted into the hot water store, or designed as a compact replacement to fit into a standard new or existing immersion heater tapping at the top or bottom of the hot water store where this is available.

In the embodiment, where the electric heater chamber is contiguous with the hot water store it may be provided with a single opening or with a connection with the hot water store or a baffle plate having a plurality of holes so that in operation restricted flow may occur in either direction between the hot water store and the electric heater chamber through this opening. The chamber is designed so that where flow is partly or wholly directly from the bypass to the discharge water does not need to flow into the hot water store.

In this embodiment the electric heater element(s) in relation to the opening in the hot water store may penetrate into the vessel itself, thus able to heat water in the upper part of the vessel depending on the configuration of the electric element. The element is may be thus constructed as a cylinder or cylindrical coil to de-stratify and heat a designated volume of water in the upper part of the vessel.

Where the hot water store has an opening at its base, the three way connection and the electric heater may be contiguous with the hot water store or contained in a separate chamber remote from the store.

The electric heater may comprise a single element or a plurality of elements according to their design, method of control and the configuration of the installation. Though they may be separate from one another they will generally be contained in or placed around the three way connection.

The pump in the bypass circuit, together with associated valves, is arranged and controlled to operate as required to maintain relevant flows and temperatures in the circuit. As the heat input in terms of temperature and quantity available from the heat exchanger may vary, the speed of the pump may be controlled accordingly or control valve(s) in the bypass circuit adjusted.

The pump can also be an important element in controlling the temperature at the discharge so that water is discharged from the hot water store and/or the bypass circuit via the electric heater(s) that may be operated or not to achieve the desired discharge temperature according to the temperature of the water in the vessel and the bypass circuit.

This feature may be of importance where the water in the hot water store has to be heated to a temperature above 60°C for the prevention of Legionella, where the installation can be programmed to use low cost off-peak electricity, and the pump will be used to force water from the electric heater down in the hot water store.

As an objective of the invention is to maximise the amount of heat stored in the hot water store, where electricity is freely or cheaply available, the water may be too hot for use in a domestic hot water system, cooler water from the bypass circuit and the cold water inlet may be mixed in the chamber with the hot water from the hot water store to achieve the desired or permitted discharge temperature, again maximising the use of the lower grade heat from the heat exchanger.

It should be noted that where a heat exchanger is present for the purposes of using low grade heat, when water heated by the electric heater is circulated in the bypass circuit and is hotter than that available in the heat exchanger, a valve shuts off the circulation of the low grade heat to the heat exchanger or shunts the flow in the bypass line through a shunt round the heat exchanger.

Similar principles apply where the source of heat is from solar thermal or excess solar photovoltaic.

Hot water from the hot water store drawn off at the discharge can also be diluted with cold or cooler water from the bypass circuit and the cold water inlet as described above.

A control valve may advantageously be fitted between the cold water inlet or feed and the inlet to the hot water store. Such a valve can be used to isolate the hot water store from the bypass circuit so that water may flow from the cold water feed to the discharge by flowing through the bypass circuit without entering the hot water store. The control valve may be used to balance, proportion or adjust the amount of water withdrawn from the hot water store and through the bypass circuit respectively. The control valve may thus permit water to be directed through the installation according to availability of hot water in the hot water store, or in the bypass circuit from an external heat source and/or from the electric heater.

Where the control valve isolates the hot water store from the bypass circuit the water is heated solely in the bypass circuit and/or the electric heater effectively as a once-through or instantaneous circuit where plentiful heat is available to the heat exchanger, or the electricity price justifies it.

The pump and control valves are preferably programmed to optimise and prioritise the use of the lowest cost energy, which is generally low-grade heat from the external heat exchanger circuit or by using temporarily available or low cost or off-peak electricity.

It can also be programmed as mentioned above so that the water in the hot water store can be heated by the electric heater to a higher temperature as a store of energy, to accommodate higher anticipated demand, or as a precaution against Legionella or in situations where there is excess local energy. In such cases the pump may be activated intermittently so that while the temperature of the water in the vessel is increased and, in the case of Legionella maintained temporarily above 60°C. Where high temperature water may be circulated from the hot water store through the bypass circuit where the circuit includes an external heat exchanger a valve shuts off the flow in the heat exchanger, which would otherwise lead to a loss of heat, unless heat can usefully be withdrawn from the heat exchanger circuit as well. Valves in the bypass circuit may also be used to allow control of the flow through the circuit and from the hot water store.

The hot water store may be elongated with a conventional cylindrical section, or other suitable section, e.g. square, so that in use it is arranged with its axis vertical with the feed pipe or passage at or near its lower end and the outlet pipe or passage at or near its top. Because of the efficiency and flexibility of an installation in accordance with the invention the hot water store may be significantly smaller than is conventional.

Alternatively, where the hot water store is designed to store energy as heat when heat or electrical energy is available or cheap, it may beneficially be over-sized to store as much hot water as possible until the next opportunity arises.

Installations of this type generally require a pressure relief valve to be fitted; such a pressure relief valve may conveniently be incorporated in the electric heater chamber or conveniently close to its outlet. Where temperature relief is required similar principles apply.

The invention is well-suited for installations using a low grade and renewable source of waste heat such as that available from solar thermal and district heating schemes. In such a case it may be advantageous to provide more than one heat exchanger in the bypass circuit, the upstream (with reference to the flow in the bypass circuit) heat exchanger being a counter-current heat exchanger, and the hotter downstream heat exchanger being a co-current heat exchanger. This arrangement can reduce scale formation in the heat exchanger. It may also permit a higher water temperature to be maintained in the hot water store thus increasing its thermal storage capacity, reducing the risk of Legionella occurring in the installation.

In all cases, the electric heater can be used for boosting the temperature in the hot water store and the bypass circuit for sterilisation, or as a back-up when heat from other energy sources is not available.

The hot water store in most cases is likely to comprise a cylindrical, insulated copper, stainless steel or enamelled steel tank, though the invention is not limited in its application only to such tanks or vessels. For domestic hot water purposes, its capacity will generally fall into the range 70 to 300 litres.

The invention thus extends to retro-fitting an existing hot water hot water store with a bypass circuit and controls as described in accordance with the invention.

The invention extends to the operation of the installation to use low or lower grade heat to pre-heat water in a hot water store by means of a heat exchanger in a bypass circuit and to bring the temperature of the water to the desired temperature at the discharge by means of an electric heater which is interposed between the bypass circuit, the hot water store and the discharge.

An installation in accordance with the invention has the advantage that it can be made not only thermodynamically very efficient and economical to run, but it is also cheap to make and simple to control, yet offers a high degree of flexibility in the management of the heat input to the installation. It can convert available electricity or low cost electricity to be stored as hot water, or it can prioritise the use of low grade heat, which is often otherwise wasted, minimising the use of high grade energy from electricity, and when required manage the sterilisation of the system.

The system is also suited to the active management of consumer demand for domestic hot water utilising least cost sources of electricity and low grade heat. This is achieved by learning the pattern of consumer demand and heating the water at times during the day and night for the overall benefit of the consumers and operators of heat and electricity networks.

The arrangement of the bypass circuit and the chamber housing the electric heater element(s) allow the circuit to be connected to standard hot water tank having just two openings or tappings; flow may travel in either direction at each opening according to demand and the supply of heat to the installation. This provides great flexibility and optimises use of lower grade energy.

It can also be adapted to a 'European' style electric water heater where the inlet and the outlet and the electric heater element are provided on a plate that is generally bolted to the base of the tank. In such a case the electric heater may either be provide in a contiguous chamber or one that is remote from the tank or hot water store.

The subject matter and disclosure of the accompanying claims comprise an element of the description of the invention and are hereby incorporated without restriction into the specification and the description of the invention.

The invention will now be described by way of example with reference to the accompanying drawings, in which:
Figure 1 is schematic line diagram of a hot water installation in accordance with the invention suited for a hot water store with two tappings;
Figure 2 is a schematic line diagram of an alternative installation in accordance with the invention, suitable for use with a hot water store with a single detachable plate at its base;
Figure 3 is schematic line diagram of an alternative hot water installation in accordance with the invention;
Figures 4a to 4d illustrate schematically the flow patterns through an electric heater at the outlet from a hot water store forming part of the installation shown in Figure 3;
Figure 4e illustrates diagrammatically various forms of electric heating elements; and
Figure 5 is a diagram illustrating one form of heat exchanger arrangement for use in an external circuit forming part of the installation.
Figure 6 is schematic line diagram of an alternative hot water installation in accordance with the invention, including means for space heating.

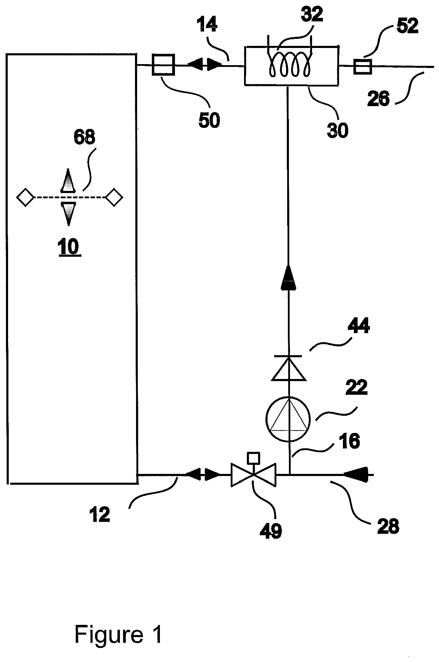

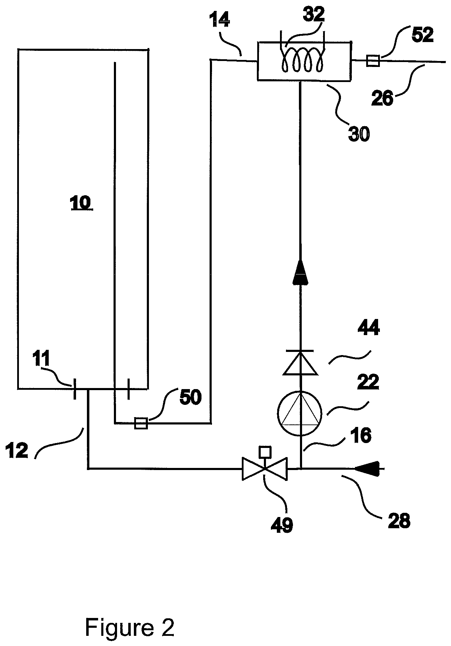

An installation in accordance with the invention and as shown diagrammatically in Figures 1 and 2 comprises a bypass circuit arranged in use for connection between a hot water store 10 and a cold water inlet or feed 28 and a hot water discharge 26 comprises a feed pipe or passage 12 arranged for connection between the hot water store and the cold water feed 28, and an outlet pipe or passage 14 arranged for connection between the hot water store 10 and the hot water discharge 26 wherein a bypass line 16 having a circulating pump 22 is provided between the feed pipe or passage12 and the outlet pipe or passage 14 and an electric heater 32 is provided in a chamber 30 at the three-way junction between the outlet pipe or passage 14, the hot water discharge 26 and the bypass line 16.

Each circuit shows a non-return valve 44 in the bypass line 16 for use with a centrifugal pump 22. However, this non-return valve is not required if the pump 22 is a positive displacement pump, which may be preferred, for example a gear pump. Arrows show the normal direction of flow in the bypass line 16.

A positive displacement pump not only prevents reverse flow from convection from occurring in the bypass circuit, but also permits the flow in the bypass circuit to be reversed either for sterilisation of the installation or for destratification of water in the hot water store.

Figure 1 shows an installation adapted for use with an insulated hot water store 10 in the form of a cylinder with two openings or tappings. Figure 2 shows an installation adapted for use with another popular form of insulated hot water store 10, typically a cylinder, with a single larger opening at its base. In such hot water stores both the feed pipe 12 and the outlet pipe are mounted on a plate 11 that is bolted or screwed to the cylinder.

In Figure 1 a control valve 49 is placed in the line between the bypass circuit 16 and the feed pipe 12 so that if desired the hot water store 10 can be isolated from the bypass circuit 16 and the cold water feed 28 and the discharge 26, so that in effect the bypass circuit 16 can be used as a once-through water heating circuit, for example if no heat store is required.

The control valve 49 can also be used to balance, proportion or adjust the amount of water withdrawn from the hot water store 10 and through the bypass circuit 16 respectively. The control valve 49 may thus permit water to be directed through the installation according to availability of hot water in the hot water store 10, or in the bypass circuit 16 from a heat exchanger connected with an external heat source (where present) and/or from the electric heater 32.

In Figure 1 a line 68 indicates the line of stratification within the hot water store 10. Depending on activation of the circulating pump 22 and heat from the electric heater 32 (and, in the case of the installations shown it the other accompanying drawings, heat supplied from other external sources 18) the line of stratification 68 may move up or down the hot water store 10 increasing or diminishing the volume of hot water in the store. In general, water above the stratification line 68 will be maintained at a temperature above that which Legionella can develop, whilst water below the line will be at a temperature below that at which Legionella can develop.

Where the control valve isolates the hot water store from the bypass circuit the water is heated solely in the bypass circuit and/or the electric heater effectively as a once-through or instantaneous circuit where plentiful heat is available to the heat exchanger, or the electricity price justifies it.

The chamber 30 containing the electric heater 32 will conveniently be provided with an expansion vessel (not shown) and a pressure relief valves that may either integral with the chamber 30 or attached to it. This permits the bypass circuit with the circulating pump, electric heater and any associated valves to be provided as a single bolt-on unit that can be fitted between a cold water feed, a hot water discharge and a hot water store.

In operation, heated water may be withdrawn directly from the hot water store 10 through the electric heater 32, or by activating the circulating pump 22 via the bypass circuit 16. Depending on the demand for hot water and the temperature of hot water in the hot water store 10 water may flow directly to the discharge 26 from the store 10. If it is not hot enough, it can be heated by activating the electric heater. If it is too hot, it can be diluted with cold water from the feed 28 by activating the circulating pump 22. Control is conveniently achieved by means of a suitably programmed controller in response to the temperature of water measured by a sensor 50 in the store 10 at or close to the outlet or in the outlet pipe 14, and by another sensor 52 at the discharge side of the electric heater chamber 30.

At times when electricity is available or available at a low tariff, the circulating pump 22 and the electric heater 32 may be activated so that water flows through the electric heater 32 into the hot water store 10 to be stored as hot water. This action may continue until the hot water store is full of water at the highest permitted temperature, even when the temperature exceeds the permitted discharge temperature. Thus water may be effectively pre heated and stored in the hot water store when electricity is available at no cost e.g. from a domestic wind or solar installation, or when surplus electricity is available from the grid or at a low tariff. As mentioned above, where the temperature of the water in the hot water store exceeds the permitted discharge temperature, water from the hot water store 10 is mixed with cold water from the feed 26 at the tree-way connection in the chamber 30 so that water leaving the installation does so at or below the permitted temperature.

Such an installation when connected to a hot water store provides a circuit to maximise the use of available or low-cost electricity to store energy as hot water, even at a temperature above that that is acceptable at the discharge.

By heating the water in the hot water store from time to time to a temperature above 60°C and using the circulating pump 22 to circulate it in the bypass line 16 allows the whole installation to be sterilised in order to eliminate Legionella.

Such an installation is thus characterised in that water may flow in either direction in the feed 12 or outlet 14 of the hot water store 10 and flows through the electric heater 32 whether it flows from the hot water store10 or from the bypass line 16, or both. The electric heater 32 and the circulating pump 22 are controlled by a programmable logic controller (not shown) programmed to ensure within the capacity of the installation that water withdrawn from the installation meets the pre-set desired temperature as measured at 52 at the discharge 26. The circulating pump 22 is likewise controlled in response to these temperatures to optimise the use of energy in the installation, and the eventual need to boost the temperature of the water using the electric heater 32.

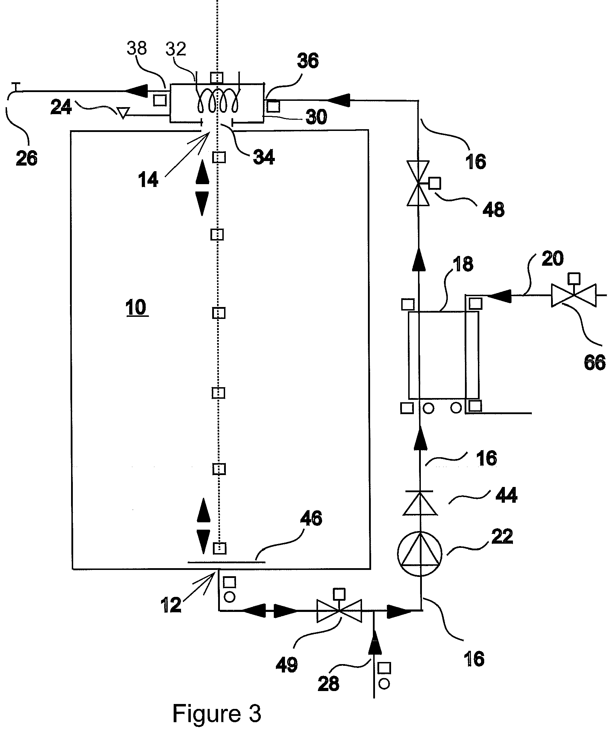

Figure 3 shows another hot water installation in accordance with the invention comprising an insulated hot water store 10 arranged in use to store hot water. The hot water store 10 has two connections: a feed pipe or passage 12 and an outlet pipe or passage 14.

Unlike the installations shown and described with reference to Figures 1, 2 and 6 where the electric heater chamber 30 is located remotely from the hot water store 10, in the installation shown and described with reference to Figure 3 the chamber 30 containing the electric heater 32 is contiguous with the hot water store 30.

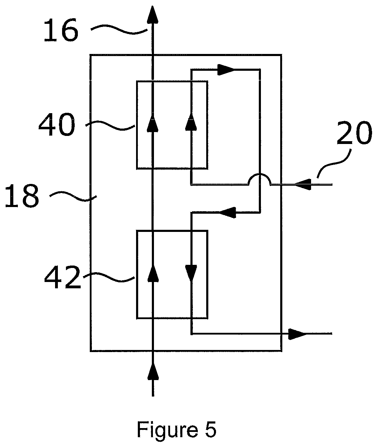

The feed pipe or passage and the outlet pipe or passage 12, 14 respectively are connected together externally by means of a bypass circuit 16 having a heat exchanger 18 arranged to receive heat from an external low or lower grade heat source 20. The source of heat, not shown, may be from a district heating circuit, a solar power unit, a heat pump, or any other source of low-grade heat. Where higher grade heat is available either on a permanent or an intermittent basis, the heat exchanger arrangement shown in Figure 5 as described below may be advantageous and even preferable to the simple counter-flow heat exchanger 18 shown in Figure 3.

The external by-pass circuit 16 has a circulating pump 22 which is activated and controlled as described below. In order to prevent reverse gravity flow of water in the bypass due to cooling and increase in density of the bypass water in relation to the water in the hot water store 10, a non-return control valve 44 and/or a control valve 48 may be provided in the bypass circuit 16. Neither the non-return valve 44 nor the control valve 48 may be required if the pump 22 is a positive displacement pump. Such a positive displacement pump may additionally have the ability to reverse the flow around the bypass to perform additional functions such as heating all the water in the vessel 10 and also in the bypass circuit 16 using the electric heater 32 for sterilisation of the installation.

An electric heater 32 is housed in a in a chamber 30 located at the three-way junction between the outlet pipe or passage 14 of the hot water store, the bypass circuit 16 and interposed between the latter and the hot water discharge 26. The chamber 30 is connected to and contiguous with the hot water store 10 by means of the passage 34.

In use water may be withdrawn at the discharge 26 directly from the hot water store through the electric heater 32. By activating the circulating pump 22, and depending on the demand for hot water, water may flow through the electric heater 32 either into the hot water store 10 to be stored as hot water or out of the hot water store 10 to the hot water discharge 26.

Depending on the demand for hot water, the temperature of water in the hot water store 10 and that in the bypass circuit 16 water may also be drawn simultaneously from the bypass circuit 16 and the hot water store 10. In each instance, depending on the temperatures of the water in the various parts of the installation and the desired temperature at the discharge, the electric heater 32 may be activated to increase the temperature of the water at the discharge 26. Equally, if the water in the hot water store 10 is above the desired discharge temperature the speed of the pump may be increased to dilute water from the hot water store with cooler water from the bypass circuit 16 and/or by drawing water from the cold water feed 28 into the bypass.

Cold water enters the installation from the cold water feed 28 to replenish water withdrawn from the installation.

This arrangement provides great flexibility, maximises the efficiency of the installation, but also is extremely cost-effective. It also allows water to be drawn either from the hot water store, or from the external bypass circuit, in other words from the external heat exchanger, or from both depending on the demand for hot water. Additionally, all flow passes through the electric heater so that when necessary the temperature of the water flowing to the discharge can be raised to the desired temperature by activating the instantaneous electric heater.

The chamber 30 housing the electric heater element(s) 32 is attached at the top of the hot water store 10. It may have a single opening 34, as shown, or a plate punched with a plurality of holes. In operation flow occurs in either direction between the hot water store 10 and the chamber through this opening 34. The chamber 30 is designed so that where flow is partly or wholly directly from the bypass 16 to the discharge 26 water does not normally flow into the hot water store 10, except at low flow rates at the discharge 26. The effect of the pump 22 is to draw incoming cold water around the pumped circuit instead of it passing through the hot water store 10. An optional control valve 48 may be inserted in the bypass circuit 16 between the circulating pump 22 and the entry 36 of the chamber 30.

Alternatively, a control valve 49 may advantageously be inserted between the cold water inlet 28 and the cold connection 12 of the hot water store 10. Where such a valve 49 is inserted in the bypass circuit 16 it provides a means to isolate the cold water inlet from the hot water store 10 so that water is heated solely on the path of the bypass circuit to the discharge 26 or as an alternative method for achieving the function performed by valve 44 or a positive displacement pump.

Where heated water from the bypass circuit 16 and from the hot water store 10 flows to the discharge 26 the position of the valve 49 and its optional modulation also allows relative flows of incoming cold water to be routed to the discharge 26 either through the bypass circuit 16 or via the hot water store 10.

The valve 49 also permits the hot water store 10 to be isolated from the inlet 28, so that the bypass circuit 16 with the heat exchanger 18 and the electric heater can be used as a once-through or instantaneous system, for example where the external heat to the heat exchanger 18 or the cost of electricity is advantageous.

It may be desired to maintain stratification between the hot and cold water in the hot water store 10. This can be improved by providing a baffle or diffuser plate 46 over the inlet or cold connection 12. The plate may either be solid, allowing water to flow round its sides, or perforated or even in the form of a mesh. If required, a similar plate (not shown) may be placed over the hot connection 14.

A pressure relief valve 24 is provided in the chamber 30. An expansion vessel (not shown) may be provided integrally or remotely.

The hot water store 10 and the electric heater chamber 30 are fully insulated. The bypass circuit 16 may also be appropriately insulated.

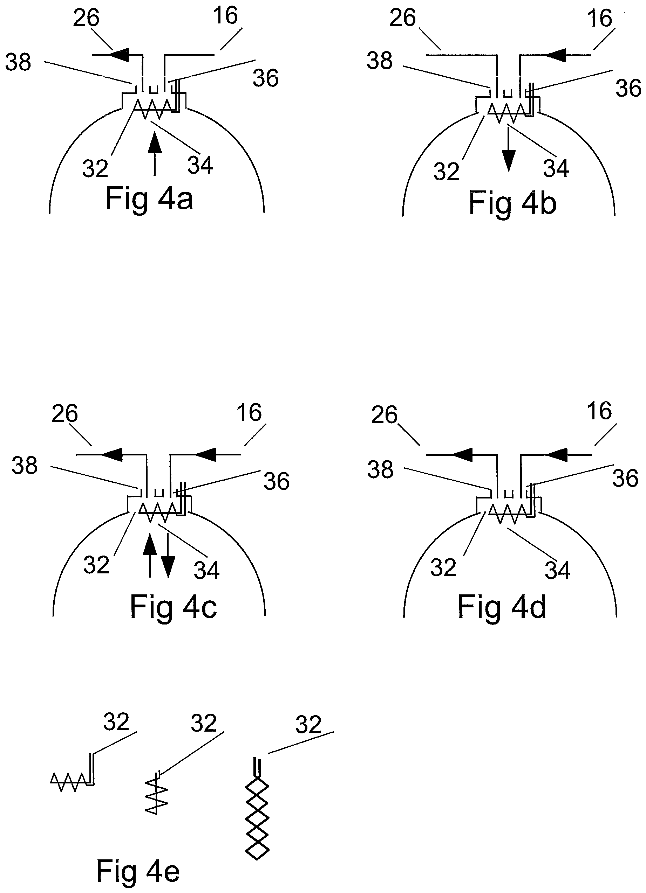

The flow through the heater unit is described more specifically below under Figures 4a to 4d in which the arrows indicate the direction of flow. The absence of an arrow indicates the absence of flow at that point in the configuration shown.

In Figure 4a, water in the hot water store 10 is at or near the desired temperature, and on demand for hot water at the discharge 26, hot water flows through chamber 30; if required the water temperature may be boosted by activating the instantaneous heater element 32. The circulating pump 22 is not operating.

In Figure 4b, the circulating pump 22 in the bypass circuit 16 is operating to circulate water which is being heated by low grade heat in the heat exchanger 18. There is no demand for hot water at the discharge 26. The temperature of the water passing through the chamber 30 to the hot water store 10 may be boosted by energising the heater element 32 if required so that the stored hot water is at the desired temperature.

In Figure 4c, hot water demand at the discharge 26 is at a maximum and requires pre-heated water both from the bypass circuit 16 and from the hot water store 10; the temperature of both streams may be boosted as they pass through the chamber 30 by activating the instantaneous electric heater element 32.

In another scenario, water in the hot water store 10 is maintained at a high temperature, above 60°C, in order to sterilise the installation and prevent occurrence of Legionella in the hot water store. In this instance, the temperature of the flow out of the hot water store 10 can be reduced by mixing it with the water from the bypass circuit 16 (or even supplementing it by drawing in water from the cold feed inlet 28) thus utilising to a maximum the low grade heat from the external heat source 20.

In Figure 4d, the circulating pump 22 is operational (or, if present, the control valve 49 is closed), and pre-heated water in the bypass circuit 16 is supplied directly to the discharge 26. It is brought up to the desired temperature by operating the electric heater 32 as an instantaneous water heater, albeit with the benefit of the pre-heated water from the heat exchanger 18 and using a maximum of the available low-grade heat.

According to the quality (temperature) of the heat supplied at the heat exchanger 18 and the hot water demand profile, it may be advantageous to have two (or more) heater elements 32 or sets of heater elements in the chamber 30. The elements 32 are then placed in series or parallel, one above the other and activated/controlled according to the temperature of the water in the hot water store 10, that in the bypass circuit 16 and the demand for hot water at the discharge 26.

As mentioned above, in most instances the installation will be used with lower-grade heat, it is so designed to be equally suitable for use with reject heat supplied at higher temperatures that may be as high as 90 to 95°C from, for example, a district heating circuit. In such cases, the electric heater 32 is primarily intended as a back-up or when the installation is first switched on or the waste heat source is not available. However, in this case, in order to minimise the build-up of scale in the heat exchanger 18 certain precautions can be taken in the design of the heat exchanger.

Figure 4e illustrates diagrammatically various forms of electric heating elements that may be incorporated in the chamber 30. Although in each instance only a single element is shown, in practice due to design or space considerations, or the availability of commercially-available products, more than a single element may be employed.

The flow patterns described with reference to Figures 4a to 4d relate to the installation shown in Figure 3 where the chamber 30 is contiguous with the hot water store 10. However, the same flow patterns occur in the installations shown in Figures 1 and 2 where the outlet 14 is connected by a pipe, equivalent to the passage 34, to the chamber 30. In such a case, flow takes place according to the same principles, namely:
in Figure 4a from the hot water store 10 through the chamber 30 to the outlet;
in Figure 4b from the bypass line 16 into the hot water store via the chamber 30;
in Figure 4c with flow from the bypass line 16 flowing through the chamber 30 26 into the hot water store 10 and or to the discharge 26 via the chamber 30, being heated if required by the electric heater 32;
in Figure 4d from the bypass line 16 to the discharge 26 via the chamber 30 without passing through the hot water store 10, being heated as required by the electric heater 32, operating effectively as a once-through heater.

Where the heat exchanger 18 is present in the installation the programming of the control of the installation is advantageously designed so that the return temperature of the water from the heat exchanger 18 to the external source is as low as possible for the purpose of maximising the efficiency of the external heat source.

A suitable arrangement is shown in Figure 5 in which heat is supplied at 90 to 95°C in line 20 and enters a first heat exchanger element 40 in a co-current flow. It leaves the first element 40 at 60 to 65°C and enters a second element 42 in counter-flow. Assuming that the feed water in the bypass circuit 16 enters at 8 to 10°C, the temperature of the water leaving the second element 42 may be as low as 14°C.

In order to operate the installation safely at optimum conditions, and to maximise the utilisation of the low grade heat from the external heat source 20 (minimising the use of high grade electric energy at the electric heater unit 32), a programmable logic controller (PLC) (not shown) is required. The PLC makes use of the temperature sensors in the hot water store 10, at the inlet 36 and outlet 38 of the chamber 30 and also flow sensors. These temperature sensors (shown by □ in Figure 3) and flow sensors (shown by o in Figure 3) provide measurements that are used to control the electric heater element(s) and the operation of the pump 22 in the bypass circuit and heat input from low grade heat sources.

By incorporating additional temperature sensors □ at various levels in the hot water store 10, utilisation of stratification of the hot water may be achieved. Stratification in the hot water store may be used to adjust the amount of water heated either on an on-going basis, or programmed at various times of the day and night to further improve economy of the system. It also allows the any heat loss from the stored water to be reduced, as the vessel can remain partially or completely full of cold water apart from hot water in the top of the vessel needed to respond to the anticipated demand at the time.

A variety of methods to control the are available by examining Figure 3, which illustrate the optional aspect of the invention and sensors for control functions of valves that control the primary flow to heat exchanger 18. Temperature and flow signals at the feed 12 and the outlet 16 allow control of flow in 20 to be such that the heat exchanger 18 operates in such a way so that the temperature of the fluid or gas supplied through 20 is returning after passing through the heat exchanger 18 is cooled to low temperatures, to allow it to optimise its capture of low grade heat from other sources.

The temperature and flow signals allow the installation and its flow rates to be intelligently managed to access the lowest cost energy sources feeding its circuits when the electric heating is operating with the heat exchanger or heat exchangers in the bypass circuit.

As can be seen from Figure 3 the arrangement for the store is one where stratification of the contents of the hot water store 10 will occur. This may be used to advantage to reduce heat losses from the store when patterns of water demand from the store are low by only storing hot water in the upper part of the hot water store.

If heat from the remote heat source 20 is or may not be available all the time, or low-cost night electricity is more cost-effective, the PLC can be programmed to activate the electric heater 32 at the appropriate times, and particularly for raising the temperature of water in the installation for sterilisation and as a precaution against Legionella. Alternatively or additionally, additional, conventional electric heating elements may be incorporated (not shown) at the top and/or at the bottom of the hot water store 10.

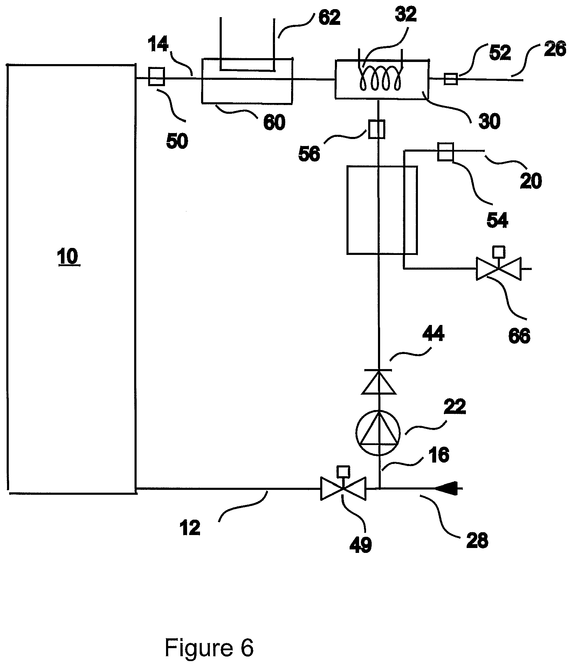

Figure 6 shows an installation in accordance with the invention, similar to that shown in Figure 1, but including a heat exchanger 18 similar in operation to that described above with reference to Figure 3. This installation additionally includes an additional heat exchanger or calorifier 60 for transferring heat to a central heating or space heating circuit 62.

Such an installation is suitable for a self-contained installation that draws low-grade heat via the heat exchanger 18 from a ground or air heat extraction linked to a heat pump with an additional heat input from wind and/or solar power. When water in the installation is heated, for example by electricity from potentially intermittent wind or solar power, the hot water store 10 may be over-sized to store the energy produced. Such an arrangement may require heating all the water in the hot water store to as high a temperature as possible, using the circulating pump 22 to circulate through the bypass line 16 to ensure that all the water in the store is at a high temperature. This may mean that the water in the bypass line 16 exceeds the temperature at the heat exchanger 18. Thus to prevent heating the water in the external circuit 20, a controllable valve 66 may be placed in the external circuit 20, permitting it to be shut off in these circumstances. Alternatively a shunt (not shown) may be placed in the bypass line 16 permitting flow to bypass the external heat exchanger 18.

In an intelligent system, in addition to the two temperature sensors 50, 52, an additional sensor 54 is required at the hot input to the heat exchanger 18 to control the installation by means of activating the circulating pump 22 and or the electric heater. A sensor 56 may also be placed in the bypass line 16 to measure the temperature in the bypass line on leaving the heat exchanger 18

Such installations as specifically described above in accordance with the invention can be fitted to an existing hot water store or tank. Each circuit as specifically described can be adapted to offer great flexibility in using low grade energy supplemented only as required by electric heating, or for the use of low cost electricity to heat water in the hot water store when electricity, e.g. from solar or wind, is plentiful and cheap, or even to use it as a once-through instantaneous circuit. It needs only two connections to the hot water store. And being self-contained, apart from the hot water store, it lends itself to being retro-fitted to existing storage tanks and installations. It requires a minimum of control, by today's standards, to achieve excellent utilisation of electricity and/or low-grade energy and high efficiency as available.

## Claims

1. An installation for fitting to a hot water store comprising:
a cold water feed (28) and a hot water discharge (26),
a cold water inlet (12) for connection to the hot water store (10) from the cold water feed and a hot water outlet pipe or passage (14) for connection between the hot water store and the hot water discharge,
a bypass circuit comprising a bypass line (16) having a circulating pump (22) and connecting between the cold water feed and the hot water discharge,
an electric heater (32) provided within the three-way junction where the bypass line, the hot water outlet pipe or passage and the hot water discharge meet so that, in use, water leaving the installation through the hot water discharge may flow in either direction in the cold water inlet and the hot water pipe or passage, and water withdrawn at the hot water discharge must flow through the electric heater whether it flows from the hot water store and/or from the bypass circuit,
wherein the circulating pump and the electric heater are controlled to achieve a preset/desired temperature at the hot water discharge, according to the temperature at the hot water outlet pipe or passage from the hot water store and that in the bypass circuit, in order to optimise the use of energy in the installation and eventually to boost the temperature of the water using the electric heater.

2. An installation as claimed in claim 1, in which the bypass circuit has one or more heat exchangers (18) arranged in use for connection to external source(s) of heat and at least one of the said heat exchangers (18) in the bypass circuit is arranged for connection to a source of low grade heat.

3. An installation as claimed in claim 1 or 2, in which a temperature sensor (50) is placed at the hot water outlet outlet pipe or passage (14), and a temperature sensor (52) is placed at the hot water discharge (26) in order to manage the water temperature at the hot water discharge 26 by controlling the electric heater 32 and the circulating pump 22.

4. An installation as claimed in claim 2, which includes a temperature sensor (56) in the bypass line (16) downstream of the heat exchanger(s) (18) that in use enables a programmable controller to control the circulating pump (22) to maximise the heat input from the heat exchangers(s) (18) to the hot water store (10).

5. An installation as claimed in any preceding claim, in which the bypass line (16) includes a non-return valve (44) arranged to prevent reverse flow in the bypass line (16).

6. An installation as claimed in any one of claims 1 to 5, in which the circulating pump (22) is a positive displacement pump.

7. An installation as claimed in claim 6, in which a programmable controller is arranged to control the positive displacement pump (22) to be reversed when connected to the hot water store (10) in order to sterilise the hot water store (10) and the bypass circuit, if necessary, by activating the electric heater (32) to achieve a required sterilisation temperature.

8. An installation as claimed in any preceding claim, in which a control valve (49) is provided in the line between the cold water feed (28) and the cold water inlet (12) for connection to the hot water store (10) and is controllable in order to balance, proportion or adjust the amount of water withdrawn respectively from the hot water store (10) and through the bypass circuit , or to isolate the hot water store (10) from the bypass circuit for once-through operation.

9. An installation as claimed in claim 1, in which a programmable controller is provided to control the activation of the electric heater (32) and/or the circulating pump (22) in response to anticipated, expected or instantaneous electricity tariffs, or the availability of solar or wind generated electricity in order to heat water in the hot water store (10).

10. An installation as claimed in claim 9, in which the programmable controller is programmable in order to receive information on electricity tariffs over the Internet or over an electric circuit in order to activate the electric heater (32) to use lowering tariffs to minimise the cost of energy for heating water in the hot water store (10) as a store of energy.

11. An installation as claimed in any preceding claim, in which the three-way junction (30) Be-comprises a chamber housing the electric heater (32) that is arranged to be located at the outlet (14) of, is contiguous with or incorporated within hot water store (10).

12. An installation as claimed in claim 11 in which the chamber has an additional connection for connecting to an expansion vessel and a pressure relief valve.

13. An installation as claimed in any one of claims 1 to 12, in which a heat exchanger (60) is provided between the hot water outlet pipe (14) for connection to the hot water store (10) and the three-way junction (30) for connection to a central heating circuit (62).

14. An installation as claimed in any preceding claim, comprising said hot water store.

## Patentansprüche

1. Einrichtung zum Anbringen an einem Heißwasservorratsbehälter, die aufweist:
eine Kaltwasserzufuhr (28) und einen Heißwasserauslass (26);
einen Kaltwassereinlass (12) zum Verbinden von der Kaltwasserzufuhr zu dem Heißwasservorratsbehälter (10) und ein Heißwasserauslassrohr oder -durchlass (14) zum Verbinden zwischen dem Heißwasservorratsbehälter und dem Heißwasserauslass,
einen Umführungskreislauf, der eine Umführungsleitung (16) mit einer Umwälzpumpe (22) aufweist und eine Verbindung zwischen der Kaltwasserzufuhr und dem Heißwasserauslass bildet,
eine elektrische Heizvorrichtung (32), die in der Dreiwege-Zusammenführung, an der die Umführungsleitung, das Heißwasserauslassrohr oder der Heißwasserdurchlass und der Heißwasserauslass aufeinandertreffen, so dass bei Betrieb Wasser, das die Einrichtung durch den Heißwasserauslass verlässt, in beide Richtungen in den Kaltwassereinlass und das Heißwasserrohr oder den Heißwasserdurchlass strömen kann, und Wasser, das an dem Heißwasserauslass entnommen wird, unabhängig davon, ob es aus dem Heißwasservorratsbehälter und/oder aus dem Umführungskreislauf strömt, durch die elektrische Heizeinrichtung strömen muss,
wobei die Umwälzpumpe und die elektrische Heizvorrichtung derart gesteuert werden, dass sie eine voreingestellte/gewünschte Temperatur am Heißwasserauslass erreichen, und zwar entsprechend der Temperatur an dem Heißwasserauslassrohr oder -durchlass aus dem Heißwasservorratsbehälter und derjenigen in dem Umführungskreislauf zum Optimieren des Energieverbrauchs in der Einrichtung und schließlich zum Erhöhen der Wassertemperatur unter Verwendung der elektrischen Heizvorrichtung.

2. Einrichtung nach Anspruch 1, bei der der Umführungskreislauf einen oder mehrere Wärmetauscher (18) aufweist, die bei Betrieb zum Verbinden mit einer externen Wärmequelle bzw. externen Wärmequellen vorgesehen sind und mindestens einer der Wärmetauscher (18) in dem Umführungskreislauf zum Verbinden mit einer Quelle mit geringer Wärme vorgesehen ist.

3. Einrichtung nach Anspruch 1 oder 2, bei der ein Temperatursensor (50) an dem Heißwasserauslassrohr oder -durchlass (14) platziert ist und ein Temperatursensor (52) an dem Heißwasserauslass (26) platziert ist, um die Wassertemperatur an dem Heißwasserauslass (26) durch Steuern der elektrischen Heizvorrichtung (32) und der Umwälzpumpe (22) zu verwalten.

4. Einrichtung nach Anspruch 2, die einen Temperatursensor (56) in der Umführungsleitung (16) stromabwärts des Wärmetauschers (18) bzw. der Wärmetauschers (18) aufweist, der es bei Betrieb ermöglicht, dass eine programmierbare Steuereinrichtung die Umwälzpumpe steuert, um den Wärmeeintrag aus dem Wärmetauscher (18) bzw. den Wärmetauschern (18) in den Heißwasservorratsbehälter zu maximieren.

5. Einrichtung nach einem der vorhergehenden Ansprüche, bei dem die Umführungsleitung ein Rückschlagventil (44) aufweist, das zum Verhindern einer Rückströmung in der Umführungsleitung vorgesehen ist.

6. Einrichtung nach einem der Ansprüche 1 bis 5, bei der die Umwälzpumpe (22) eine Verdrängerpumpe ist.

7. Einrichtung nach Anspruch 6, bei der eine programmierbare Steuereinrichtung vorgesehen ist zum Steuern des Umschaltens der Verdrängerpumpe (22), wenn diese mit dem Heißwasservorratsbehälter (10) verbunden ist, um den Heißwasservorratsbehälter (10) und gegebenenfalls den Umführungskreislauf zu sterilisieren durch Aktivieren der elektrischen Heizeinrichtung (32) zwecks Erreichens einer erforderlichen Sterilisationstemperatur.

8. Einrichtung nach einem der vorhergehenden Ansprüche, bei der ein Steuerventil (49) in der Leitung zwischen der Kaltwasserzufuhr (29) und dem Kaltwassereinlass (12) zum Verbinden mit dem Heißwasservorratsbehälter (10) vorgesehen ist und steuerbar ist, um die Menge an Wasser, die jeweils aus dem Heißwasservorratsbehälter (10) und durch den Umführungskreislauf entnommen wird, auszugleichen, zu proportionieren oder einzustellen oder den Heißwasserbehälter (10) gegen den Umführungskreislauf für einen einmaligen Durchlauf zu isolieren.

9. Einrichtung nach Anspruch 1, bei der eine programmierbare Steuereinrichtung vorgesehen ist zum Steuern der Aktivierung der elektrischen Heizvorrichtung (32) und/oder der Umwälzpumpe (22) in Reaktion auf voraussichtliche, erwartete oder unmittelbar bevorstehende Stromtarife oder die Verfügbarkeit von durch Sonnen- oder Windenergie erzeugtem Strom zum Erwärmen von Wasser in dem Heißwasservorratsbehälter (10).

10. Einrichtung nach Anspruch 9, bei der die programmierbare Steuereinrichtung programmierbar ist auf das Empfangen von Informationen bezüglich Stromtarifen über das Internet oder über ein elektrisches Netzwerk zum Aktivieren der elektrischen Heizvorrichtung (32), um zwecks Minimierung von Energiekosten zum Erwärmen von Wasser in dem Heißwasservorratsbehälter (10) als Energievorrat niedrigere Tarife zu nutzen.

11. Einrichtung nach einem der vorhergehenden Ansprüche, bei der die Dreiwege-Zusammenführung (30) eine Kammer aufweist, die die elektrische Heizeinrichtung (32) aufnimmt, die dazu vorgesehen ist, am Auslass (14) des, angrenzend an den oder eingebaut in den Heißwasservorratsbehälter (10) angeordnet zu sein.

12. Einrichtung nach Anspruch 11, bei der die Kammer eine zusätzliche Verbindung zum Verbinden mit einem Ausdehnungsgefäß und einem Druckentlastungsventil aufweist.

13. Einrichtung nach einem der Ansprüche 1 bis 12, bei der ein Wärmetauscher (60) zwischen dem Heißwasserauslassrohr (14) zum Verbinden mit dem Heißwasservorratsbehälter (10) und der Dreiwege-Zusammenführung (30) zum Verbinden mit einem zentralen Heizkreislauf (62) vorgesehen ist.

14. Einrichtung nach einem der vorhergehenden Ansprüche, die den Heißwasservorratsbehälter aufweist.

## Revendications

1. Installation destinée à être raccordée à un réservoir d'eau chaude comprenant :
une alimentation en eau froide (28) et une évacuation d'eau chaude (26),
une entrée d'eau froide (12) destinée à être raccordée au réservoir d'eau chaude (10) provenant de l'alimentation en eau froide et un conduit ou passage de sortie d'eau chaude (14) destiné à être raccordé entre le réservoir d'eau chaude et l'évacuation d'eau chaude,
un circuit de dérivation comprenant une conduite de dérivation (16) présentant une pompe de mise en circulation (22) et se raccordant entre l'alimentation en eau froide et l'évacuation d'eau chaude,
un dispositif de chauffage électrique (32) prévu au sein de la jonction trois voies au niveau de laquelle la conduite de dérivation, le conduit ou passage de sortie d'eau chaude et l'évacuation d'eau chaude se rencontrent de sorte que, en utilisation, l'eau sortant de l'installation par le biais de l'évacuation d'eau chaude peut s'écouler dans les deux sens dans l'entrée d'eau froide et le conduit ou passage de sortie d'eau chaude, et l'eau soutirée au niveau de l'évacuation d'eau chaude doit s'écouler par le dispositif de chauffage électrique qu'elle s'écoule depuis le réservoir d'eau chaude et/ou depuis le circuit de dérivation,
où la pompe de mise en circulation et le dispositif de chauffage électrique sont commandés pour obtenir une température préétablie/souhaitée au niveau de l'évacuation d'eau chaude, selon la température au niveau du conduit ou passage de sortie d'eau chaude en sortie du réservoir d'eau chaude et celle dans le circuit de dérivation, de sorte à optimiser l'utilisation d'énergie dans l'installation et éventuellement pour augmenter la température de l'eau à l'aide du dispositif de chauffage électrique.

2. Installation selon la revendication 1, dans laquelle le circuit de dérivation présente un ou plusieurs échangeurs thermiques (18) agencés pour une utilisation de raccordement à une ou plusieurs sources externes de chaleur et au moins l'un desdits échangeurs thermiques (18) dans le circuit de dérivation est agencé pour être raccordé à une source de chaleur de basse énergie.

3. Installation selon la revendication 1 ou 2, dans laquelle un capteur de température (50) est placé au niveau du conduit ou passage de sortie d'eau chaude (14), et un capteur de température (52) est placé au niveau de l'évacuation d'eau chaude (26) de sorte gérer la température de l'eau au niveau de l'évacuation d'eau chaude (26) en commandant le dispositif de chauffage électrique (32) et la pompe de mise en circulation (22).

4. Installation selon la revendication 2, laquelle inclut un capteur de température (56) dans la conduite de dérivation (16) en aval du ou des échangeurs thermiques (18) qui en utilisation permet à une unité de commande programmable de commander la pompe de mise en circulation (22) pour maximiser le transfert de chaleur du ou des échangeurs thermiques (18) vers le réservoir d'eau chaude (10).

5. Installation selon l'une quelconque des revendications précédentes, dans laquelle la conduite de dérivation (16) inclut un clapet de non-retour (44) agencé pour empêcher tout écoulement inverse dans la conduite de dérivation (16).

6. Installation selon l'une quelconque des revendications 1 à 5, dans laquelle la pompe de mise en circulation (22) est une pompe volumétrique.

7. Installation selon la revendication 6, dans laquelle une unité de commande programmable est agencée pour commander la pompe volumétrique (22) de sorte à l'inverser lorsqu'elle est raccordée au réservoir d'eau chaude (10) afin de stériliser le réservoir d'eau chaude (10) et le circuit de dérivation, si nécessaire, en activant le dispositif de chauffage électrique (32) de sorte à obtenir une température de stérilisation requise.

8. Installation selon l'une quelconque des revendications précédentes, dans laquelle une vanne de commande (49) est prévue dans la conduite entre l'alimentation en eau froide (28) et l'entrée d'eau froide (12) pour être raccordée au réservoir d'eau chaude (10) et est commandable de sorte à équilibrer, proportionner ou ajuster la quantité d'eau soutirée respectivement du réservoir d'eau chaude (10) et par le circuit de dérivation, ou de sorte à isoler le réservoir d'eau chaude (10) du circuit de dérivation pour une opération en circuit ouvert.

9. Installation selon la revendication 1, dans laquelle une unité de commande programmable est prévue pour commander l'activation du dispositif de chauffage électrique (32) et/ou de la pompe de mise en circulation (22) en réponse à des tarifs d'électricité anticipés, attendus ou instantanés, ou à la disponibilité d'électricité d'origine solaire ou éolienne de sorte à chauffer l'eau dans le réservoir d'eau chaude (10).

10. Installation selon la revendication 9, dans laquelle l'unité de commande programmable est programmable de sorte à recevoir des informations sur les tarifs d'électricité par le bais d'Internet ou d'un circuit électrique de sorte à activer le dispositif de chauffage électrique (32) de manière à utiliser des tarifs réduits afin de réduire le plus possible le coût de l'énergie utilisée pour chauffer l'eau dans le réservoir d'eau chaude (10) servant de réserve d'énergie.

11. Installation selon l'une quelconque des revendications précédentes, dans laquelle la jonction trois voies (30) comprend une enceinte logeant le dispositif de chauffage électrique (32) qui est agencée pour être située au niveau de la sortie (14) du, est contiguë avec ou incorporée dans le réservoir d'eau chaude (10).

12. Installation selon la revendication 11, dans laquelle l'enceinte présente un raccord supplémentaire pour un raccordement à un vase d'expansion et à une soupape de sécurité.

13. Installation selon l'une quelconque des revendications 1 à 12, dans laquelle un échangeur thermique (60) est prévu entre le conduit de sortie d'eau chaude (14) destiné à être raccordé au réservoir d'eau chaude (10) et la jonction trois voies (30) destinée à être raccordée à un circuit de chauffage central (62).

14. Installation selon l'une quelconque des revendications précédentes, comprenant ledit réservoir d'eau chaude.
